# FASCICULE DE BREVET EUROPEEN

(11) **EP 1 882 204 B1**
(45) Date de publication et mention de la délivrance du brevet: **05.08.2009**
(21) Numéro de dépôt: 06755174.7
(22) Date de dépôt: 12.05.2006
(51) Int. Cl.: G02B 13/14, G02B 13/06, F41H 11/02, G02B 23/12

(54) **TETE OPTIQUE POUR DETECTEUR DE DEPART DE MISSILES OU AUTRE EQUIPEMENT DE VEILLE**
OPTISCHER KOPF ZUM ERKENNEN DES STARTS VON FLUGKÖRPERN ODER ANDERE ÜBERWACHUNGSGERÄTE
OPTICAL HEAD FOR DETECTING THE LAUNCH OF MISSILES OR OTHER MONITORING EQUIPMENT

(30) Priorité: 13.05.2005 FR 0504844
(43) Date de publication de la demande: 30.01.2008
(73) Titulaire: THALES, 92200 Neuilly sur Seine (FR)
(72) Inventeur: BOUCHARDY, Anne-Marie Marks & Clerk France, F-94117 Arceuil (FR); JOUGLA, Paul, F-94117 Arcueil (FR); PERRUCHOT, Ludovic, F-94117 Arceuil (FR); VERDY, Olivier, F-94117 Arcueil (FR)
(74) Mandataire: Henriot, Marie-Pierre
(86) Numéro de dépôt international: PCT/EP2006/062263
(87) Numéro de publication internationale: WO 2006/122907

(56) Documents cités:
- EP-A- 0 766 112
- FR-A- 2 711 806
- US-A- 5 258 618
- US-A1- 2004 211 907
- US-A1- 2004 212 877

## Description

L'invention concerne une tête optique utilisée dans un équipement de veille tel qu'un détecteur de départ de missile (DDM). Un véhicule, un avion ou un hélicoptère par exemple, qui est équipé d'un DDM est ainsi alerté lorsqu'un missile le menace.

Un DDM est classiquement pourvu d'une tête optique qui collecte les photons et les convertit en un signal électrique et d'un boîtier de traitement qui analyse ce signal électrique pour détecter un éventuel missile, menaçant le porteur.

De manière générale, le besoin opérationnel comprend quatre principaux paramètres : probabilité de détection (vs portée), taux de fausse alarme, temps de déclaration et couverture spatiale. Les trois premiers paramètres dépendent essentiellement du traitement et le dernier de la configuration opto-mécanique. Le traitement comprend trois étapes : une étape de détection qui a pour rôle de distinguer les sources ponctuelles des sources résolues et de les extraire du fond, une étape de pistage dans laquelle chacun des points chauds fait l'objet d'un traitement spatio temporel pour évaluer ses caractéristiques et une étape de classification en fonction des résultats du pistage. La menace est classifiée comme dangereuse ou non suivant une comparaison par rapport à une base de données de critères et de fausse alarme typique. De plus, la prise d'image de la scène et son traitement doivent être rapides. Le temps de déclaration du DDM représente le temps maximal écoulé entre le tir du missile et l'instant de déclaration par le DDM comme 'menace'. Cette contrainte est importante pour la capacité de réaction face à la menace.

Les performances du DDM résultent d'un compromis entre ces quatre critères. Ce compromis dépend de l'optimisation de la tête optique et des traitements.

Il existe différentes catégories de têtes optiques.

Il est connu d'utiliser dans une tête optique un détecteur IR mono spectral avec une raie large d'environ 2 µ et donc peu sélective.

Le détecteur IR peut être un détecteur linéaire tel qu'une barrette, ou un détecteur matriciel.

Avec un détecteur linéaire fonctionnant à une cadence de balayage d'environ 1 Hz, le taux de fausse alarme est élevé notamment dans un environnement urbain, ce qui rend son utilisation opérationnelle délicate.

Un détecteur matriciel permet d'obtenir une image à une meilleure cadence, comme par exemple supérieure à 20 images par seconde ; mais classiquement, le champ de vue est étroit. Il faut alors utiliser plusieurs têtes optiques pour avoir une couverture spatiale importante, ce qui a des conséquences en terme de coût et de fiabilité du système.

Le but de l'invention est de pouvoir réaliser un équipement de veille fiable, à coût réduit, permettant de détecter des missiles avec un taux de fausse alarme acceptable.

L'invention a pour objet une tête optique d'un équipement de veille destiné à être installé à bord d'un véhicule, et comportant un détecteur matriciel. Elle est principalement **caractérisée en ce que** ce détecteur est sensible dans la bande spectrale IR2 avec une largeur de bande inférieure à 1 µm et centrée sur une valeur pré-déterminée X0 et est apte à fonctionner à une cadence supérieure à 20 Hz, et en ce qu'elle comprend un dispositif optique de type « Fish-Eye » qui présente une couverture angulaire supérieure à 140° x 140°.

Cette tête optique comporte ainsi un détecteur matriciel sensible dans une bande spectrale étroite et centrée en X0, associé à un dispositif optique de type « Fish-Eye » (FE) qui présente une couverture spatiale importante telle qu'une couverture angulaire hémisphérique.

On obtient alors une tête optique spectralement sélective qui acquiert le signal avec une cadence suffisamment rapide pour détecter des cibles avec une probabilité élevée et un taux de fausse alarme faible et dont la couverture angulaire permet d'éviter de recourir à plusieurs têtes.

L'invention a aussi pour objet un détecteur de départ de missile équipé d'une tête optique telle que décrite.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un dispositif optique de type « Fish-Eye »,
la figure 2 représente schématiquement un exemple de distribution d'images parasites dues au soleil,
la figure 3 représente schématiquement l'éclairement normalisé sur le détecteur en tenant compte de l'image du soleil et des images parasites.

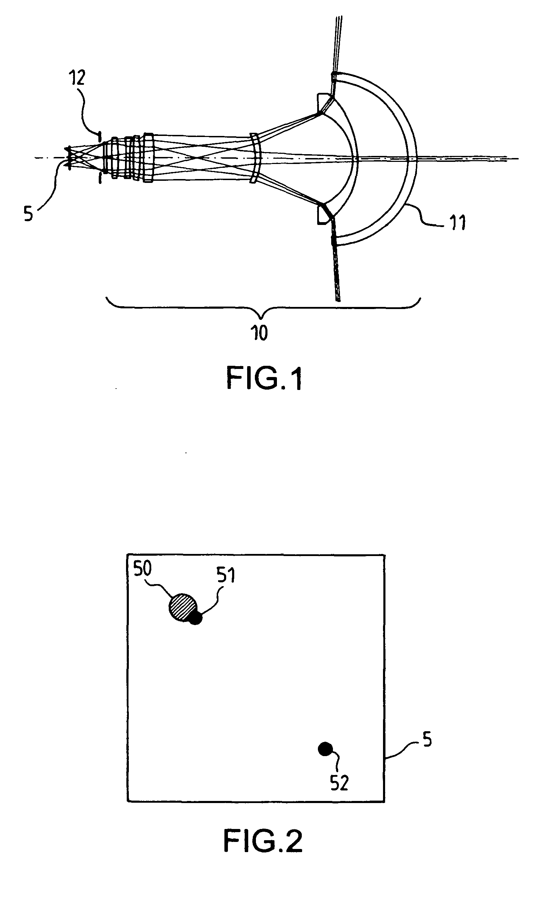

La tête optique selon l'invention comporte un détecteur matriciel sensible dans la bande spectrale IR2 comprise entre 3 et 5 µ, avec une largeur de bande étroite et centrée en X0 ; il est associé à un dispositif optique de type « Fish-Eye » (FE) qui présente une couverture spatiale importante telle qu'une couverture angulaire hémisphérique. Comme représenté figure 1, le dispositif FE 10 disposé devant un détecteur matriciel 5, comporte une combinaison optique, basée sur des lentilles dont une lentille d'entrée 11 négative de forme hémisphérique. Compte tenu du besoin opérationnel de couverture pouvant atteindre 4 π stéradians, le soleil, dans le cas d'une mission de jour, est présent de façon continue dans le champ d'une tête optique. Les réflexions induites en interne sont comparables en intensité aux signaux provenant des missiles. En conséquence, la transmission totale du dispositif FE est élevée, supérieure à 70% et le coefficient de réflexion de la structure qui abrite ses composants est faible, inférieur à 10%, de manière à diminuer ces réflexions internes et ainsi obtenir un faible taux d'images parasites.

En outre, pour séparer une image de missile de l'environnement solaire, il est important que les intensités combinées de toutes les images parasites solaires soient maintenues à un faible niveau quelle que soit la position du soleil dans le champ de vue. Ces images parasites sont principalement provoquées par des réflexions parasites sur les surfaces des lentilles, par la diffusion sur la structure en métal et sur les surfaces des lentilles en diamant.

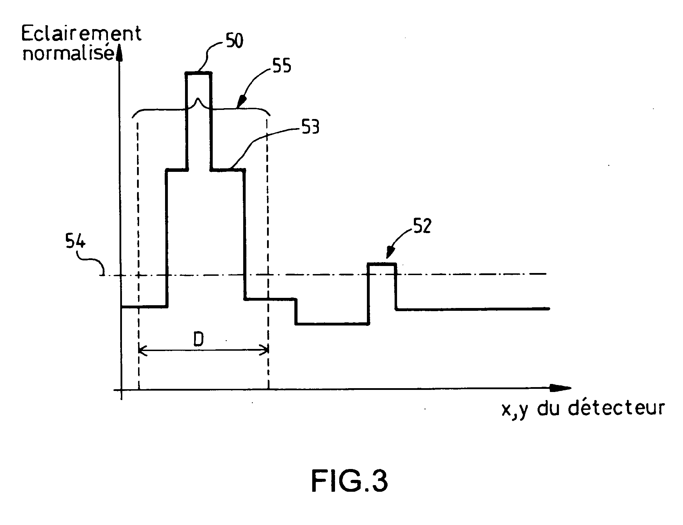

Les surfaces des lentilles sont optimisées pour diminuer les images parasites. De plus toutes les images parasites ne dégradent pas les performances de la tête optique. L'image directe du soleil crée une zone d'exclusion sur le détecteur 5 comme illustré figure 2. Une image parasite 51 située au voisinage de l'image du soleil 50 n'a pas d'impact sur les performances, mais une image parasite 52 éloignée de l'image du soleil altère les performances en créant une autre zone d'exclusion. La zone d'exclusion 55 représentée figure 3, créée par l'image directe du soleil 50 est calculée à partir de l'image de diffraction du soleil 53 : elle est de forme circulaire, de diamètre D. Une image parasite située dans cette zone n'est pas gênante, même lorsqu'elle a une haute intensité. On définit un seuil d'intensité 54 au-dessus duquel une image parasite 52 située en-dehors de cette zone 55 devient gênante.

Le diamètre d de la pupille d'entrée 12 est déterminé pour qu'à partir d'un point source donné, suffisamment de signal puisse être focalisé sur le pixel correspondant du détecteur matriciel. Il est aussi déterminé en fonction de l'ouverture F/d, F étant la focale globale du dispositif FE. La qualité de l'optique (fonction de la résolution spatiale et des aberrations) est choisie pour focaliser au moins 80% de l'énergie sur un pixel.

Pour éviter de remplacer régulièrement la lentille d'entrée qui est soumise à des conditions environnementales hostiles, il est prévu une structure de protection de la tête optique.

Pour protéger la lentille d'entrée, la structure de protection comporte un dôme hémisphérique fabriqué dans un matériau permettant de résister aux conditions environnementales hostiles. Le silicium ou le saphir peuvent être choisis. Un revêtement de carbone-diamant amorphe qui présente de grandes qualités de dureté, de transparence et de tenues en température, peut être déposé sur le côté extérieur du dôme pour résister à l'érosion par la pluie.

Les variations de température et de pression dégradent la qualité optique du dispositif FE. La combinaison optique et les matériaux des lentilles sont choisis pour obtenir une focale du système quasi constante malgré des variations de température et de pression pouvant couvrir un large domaine de température [-60°C ; +60°C] et de pression [27hPa ; 1050 hPa]. De la même manière, la combinaison optique est étudiée afin de disposer d'une qualité optique constante dans le champ.

Le détecteur matriciel, en l'occurrence un détecteur IR est inclus dans un bloc de détection IR. Le détecteur IR qui a par exemple un format de 640 x 512 pixels² (voire 1000 x 1000 pixels²), est associé dans ce bloc à un dewar, une machine à froid de type linéaire et une carte électronique de commande du détecteur. On rappelle qu'un dewar est une enveloppe sous vide à environ -200° C qui contient le détecteur.

Le détecteur matriciel comporte de manière connue un transducteur qui transforme les photons reçus en un signal électrique et un circuit de lecture qui transmet le signal électrique à des moyens de traitement du signal électrique.

De préférence, le détecteur matriciel comprend en outre un élément de traitement de proximité relié au circuit de lecture et aux moyens de traitement du signal. Il permet d'effectuer une correction des non uniformités de la matrice suivant les conditions d'emploi. Cet élément permet aussi d'intégrer une image selon deux temps d'intégration au choix. On peut ainsi intégrer aussi bien des images à faible éclairement qu'à fort éclairement: le détecteur présente alors une grande dynamique d'éclairement. Un temps d'intégration court de 50 µs par exemple est choisi pour des images très lumineuses, alors qu'un temps d'intégration plus long d'1 ms par exemple est choisi pour des images peu lumineuses. Un tel détecteur matriciel est désigné détecteur matriciel à mode combiné.

Dans le cas d'un détecteur classique, on forme deux images successives avec chacune un temps d'intégration différent.

La tête optique selon l'invention est destinée à équiper un équipement de veille, installé à bord d'un véhicule comme par exemple un avion, un hélicoptère, un véhicule terrestre ou maritime.

## Revendications

1. Tête optique d'un équipement de veille destiné à être installé à bord d'un véhicule, et comportant un détecteur matriciel (5), **caractérisée en ce que** ce détecteur est sensible dans la bande spectrale IR2, avec une largeur de bande inférieure à 1 µ, centrée sur une valeur pré-déterminée X0 et est apte à fonctionner avec une cadence supérieure à 20 Hz, et **en ce qu'**elle comprend un dispositif optique (10) de type « Fish-Eye » qui présente une couverture angulaire supérieure à 140° x 140°.

2. Tête optique selon la revendication précédente, **caractérisée en ce que** le dispositif de type « Fish-Eye » a une transmission totale supérieure à 70% et est inclus dans une structure dont le coefficient de réflexion est inférieur à 10%, de manière à obtenir un faible taux d'images parasites.

3. Tête optique selon la revendication précédente, **caractérisée en ce que** le dispositif (10) de type « Fish-Eye » comporte une combinaison optique, basée sur des lentilles fabriquées dans des matériaux déterminés afin d'obtenir une focale sensiblement constante quelles que soient les variations de pression et de température et afin d'obtenir une qualité optique constante dans la couverture angulaire.

4. Tête optique selon l'une quelconque des revendications précédentes, **caractérisée en ce que** le dispositif (10) FE comprend une lentille d'entrée (11) et **en ce que** la tête comprend une structure de protection qui comporte un dôme hémisphérique destiné à protéger la lentille d'entrée du dispositif FE.

5. Tête optique selon l'une quelconque des revendications précédentes, **caractérisée en ce que** le détecteur matriciel est à mode combiné.

6. Détecteur de départ de missile équipé d'une tête optique selon l'une quelconque des revendications précédentes.

## Claims

1. Optical head of surveillance equipment intended to be installed aboard a vehicle, and comprising a matrix detector (5), **characterized in that** this detector is sensitive in the IR2 spectral band, with a bandwidth of less than 1 µ, centered on a predetermined value X0 and is able to operate with a frequency of greater than 20 Hz, and **in that** it comprises an optical device (10) of "Fish-Eye" type which exhibits an angular coverage of greater than 140° x 140°.

2. Optical head according to the preceding claim, **characterized in that** the device of "Fish-Eye" type has a total transmission of greater than 70% and is included in a structure whose reflection coefficient is less than 10%, so as to obtain a low spurious image rate.

3. Optical head according to the preceding claim, **characterized in that** the device (10) of "Fish-Eye" type comprises an optical combination, based on lenses manufactured in materials determined so as to obtain a substantially constant focal length whatever the variations in pressure and temperature and so as to obtain a constant optical quality in the angular coverage.

4. Optical head according to any one of the preceding claims, **characterized in that** the FE device (10) comprises an input lens (11) and **in that** the head comprises a protective structure which comprises a hemispherical dome intended to protect the input lens of the FE device.

5. Optical head according to any one of the preceding claims, **characterized in that** the matrix detector is of combined mode type.

6. Missile departure detector equipped with an optical head according to any one of the preceding claims.

## Patentansprüche

1. Optischer Kopf eines an Bord eines Fahrzeugs zu installierenden Überwachungsgeräts, der einen Matrixdetektor (5) aufweist, **dadurch gekennzeichnet, dass** dieser Detektor im Spektralband IR2 anspricht, mit einer Bandbreite geringer als 1 µ, zentriert auf einen vorbestimmten Wert X0, und mit einer Geschwindigkeit von mehr als 20 Hz arbeiten kann, und dass der Kopf eine optische Vorrichtung (10) vom Typ "Fish-Eye" aufweist, die einen Erfassungswinkel von mehr als 140° x 140° hat.

2. Optischer Kopf nach dem vorhergehenden Anspruch, **dadurch gekennzeichnet, dass** die Vorrichtung vom Typ "Fish-Eye" eine Gesamtübertragung von mehr als 70% hat und Teil einer Struktur ist, deren Reflexionskoeffizient unter 10% liegt, um einen geringen Grad an Störbildern zu erhalten.

3. Optischer Kopf nach dem vorhergehenden Anspruch, **dadurch gekennzeichnet, dass** die Vorrichtung (10) vom Typ "Fish-Eye" eine optische Kombination basierend auf Linsen aufweist, die aus bestimmten Werkstoffen hergestellt sind, um unabhängig von den Druck- und Temperaturveränderungen eine im Wesentlichen konstante Brennweite und eine konstante optische Qualität des Erfassungswinkels zu erhalten.

4. Optischer Kopf nach einem der vorhergehenden Ansprüche, **dadurch gekennzeichnet, dass** die Vorrichtung (10) FE eine Eingangslinse (11) enthält, und dass der Kopf eine Schutzstruktur enthält, die eine halbkugelförmige Kuppel aufweist, die dazu bestimmt ist, die Eingangslinse der Vorrichtung FE zu schützen.

5. Optischer Kopf nach einem der vorhergehenden Ansprüche, **dadurch gekennzeichnet, dass** der Matrixdetektor einer mit kombiniertem Modus ist.

6. Flugkörperstart-Detektor, der mit einem optischen Kopf nach einem der vorhergehenden Ansprüche ausgestattet ist.
